Europäisches Patentamt

European Patent Office

Office européen des brevets

(11) Veröffentlichungsnummer : **0 425 530 B1**

(19)

(12)                    **EUROPÄISCHE PATENTSCHRIFT**

(45) Veröffentlichungstag der Patentschrift :
30.09.92 Patentblatt 92/40

(51) Int. Cl.⁵ : **E03F 7/02, F16K 7/10**

(21) Anmeldenummer : **89907666.5**

(22) Anmeldetag : **07.07.89**

(86) Internationale Anmeldenummer :
**PCT/DE89/00447**

(87) Internationale Veröffentlichungsnummer :
**WO 90/00652 25.01.90 Gazette 90/03**

(54) **ABSPERRVORRICHTUNG FÜR ABFLUSSKANÄLE.**

(30) Priorität : **12.07.88 DE 3823556**
**04.01.89 DE 3900133**
**23.01.89 DE 8900674 U**

(43) Veröffentlichungstag der Anmeldung :
**08.05.91 Patentblatt 91/19**

(45) Bekanntmachung des Hinweises auf die
Patenterteilung :
**30.09.92 Patentblatt 92/40**

(84) Benannte Vertragsstaaten :
**AT BE CH DE FR GB IT LI LU NL SE**

(56) Entgegenhaltungen :
**FR-A- 2 617 572**
**US-A- 3 870 085**
**US-A- 3 890 994**

(73) Patentinhaber : **SION, Karl**
**Halfendriesch 4**
**W-5100 Aachen (DE)**
Patentinhaber : **WIRTZ, Dieter**
**Krebsstrasse 74**
**W-5100 Aachen (DE)**

(72) Erfinder : **SION, Karl**
**Halfendriesch 4**
**W-5100 Aachen (DE)**
Erfinder : **WIRTZ, Dieter**
**Krebsstrasse 74**
**W-5100 Aachen (DE)**

(74) Vertreter : **von Creytz, Dietrich, Dipl.-Phys.**
**Tannenweg 25**
**W-5144 Wegberg (DE)**

EP 0 425 530 B1

## Beschreibung

Die Erfindung betrifft eine Absperrvorrichtung für Abflußkanäle, -schächte, -rohre oder dergleichen mit einem elastischen Aufblaskörper, welcher eine Öffnung mit darin luftdicht integriertem Druckgasanschluß besitzt. Unter dem Begriff "Druckgas" wird jedes im vorliegendem Zusammenhang geeignete Gas, vorzugsweise Luft, verstanden.

Zum Abdichten von Wassereinläufen und Kanalschächten auf Straßen oder in Fabrikgeländen ist für Unglücksfälle, z. B. bei ausgelaufenen Chemikalien oder Erdölprodukten, vorgeschlagen worden, in den Kanalschacht eine Abdichtblase im entspannten Zustand einzusetzen und dann aus der Druckluftquelle so aufzublasen, daß der Kanaleingang bis zur Beseitigung der Gefahr verschlossen wird. Als Druckluftquelle können Druckluftflaschen, $CO_2$-Patronen oder dergleichen benutzt werden. Da in der Praxis häufig mehrere Abflüsse zugleich abgedichtet werden müssen, ist jeder Abdichtblase eine Druckluftquelle zuzuordnen. Zum Handhaben der ganzen Einrichtung sind daher im allgemeinen zwei Personen erforderlich. Außerdem wird für die Absperrvorrichtung zu viel Lagerraum, z. B. im Feuerwehrfahrzeug, erforderlich.

Wenn man zum Vereinfachen der Handhabung jeder Abdichtblase eine über einen Anstich-Adapter zu öffnende Druckgaskapsel zuordnet, kann die Abdichtblase nur auf ein maximales Volumen, also nicht angepaßt an das jeweilige Erfordernis, gebracht werden. Auch in diesem Fall sind letztlich zwei Bauteile, nämlich die Abdichtblase und die Druckgaskapsel beim Einsetzen in den Kanalschacht zu halten, so daß die Bedienungsperson in tief gebückter Haltung mit beiden Händen arbeiten muß, sich also nicht abstützen kann.

Eine Absperrvorrichtung eingangs genannter Art mit einem elastischen Aufblaskörper, welcher eine Öffnung mit darin luftdicht integriertem Druckgasanschluß besitzt und einen mit dem Druckgasanschluß zu verbindenden Druckgasbehälter umschließt, wird in der FR-A-2 617 572 beschrieben. Dort wird zum Aktivieren des Aufblaskörpers ein auf eine Membran wirkender Schlagbolzen vorgesehen. Gegebenenfalls wird der gesamte Druckgasvorrat sofort ungeregelt in den Aufblaslörper übergeleitet.

Der Erfindung liegt die Aufgabe zugrunde, eine Absperrvorrichtung für Regeneinläufe, Kanalschächte oder dergleichen an Straßen, in Fabrikgeländen, auf Flugplätzen usw. zu schaffen, die einteilig ausgebildet ist und mit einer Hand in den jeweiligen Kanal optimal positioniert einzusetzen un zu aktivieren, das heißt aufzublasen, ist, derart, daß die Bedienungsperson sich bei der Abdichtarbeit sogar mit der anderen Hand am Boden abstützen kann.

Die erfindungsgemäße Lösung besteht für die Absperrvorrichtung eingangs genannter Art mit einem elastischen Aufblaskörper, welcher eine Öffnung mit darin luftdicht integriertem Druckgasanschluß besitzt, darin, daß der Aufblaskörper einen mit dem Druckgasanschluß zu verbinden Druckgasbehälter umschließt und einen Tragegriff besitzt.

Durch die Erfindung wird erreicht, daß die Absperrrvorrichtung aus einem einzigen Bauteil besteht, das mit einer Hand - gefaßt an dem Tragegriff - im gefährdeten Kanal zu positionieren und mit Druckgas zu aktivieren ist. Das Befüllen mit Druckgas kann durch Betätigen eines Ventils (mit der die Vorrichtung tragenden Hand), z. B; durch Drücken eines Knopfes, durch Umlegen eines Hebels oder durch eine Zangenbewegung, erfolgen.

Für ein Anpassen des Volumens des aktivierten Aufblaskörpers an das jeweilige Erfordernis ist es gemäß weiterer Erfindung besonders günstig, wenn in die Verbindung zwischen Druckgasbehälter und Aufblaskörper eine, vorzugsweise manuell zu betätigende, Gasdosiereinrichtung eingesetzt wird. Mit der einen die Absperrvorrichtung in den Kanal setzenden Hand kann dann die Bedienungsperson nicht nur die Vorrichtung richtig positionieren, sondern auch das jeweils am günstigsten erscheinende Volumen des Aufblaskörpers einstellen. Die Handhabung ist dabei am einfachsten, wenn die Gasdosiereinrichtung fest mit dem Druckgasbehälter verbunden wird und wenn an dieser Verbindung bzw. Kupplung auch der Tragegriff befestigt wird.

Gemäß weiterer Erfingung soll die Verbindung zwischen Gasdosiereinrichtung und Aufblaskörper eine außerhalb des Aufblaskörpers angeordnete und mit einem Anschluß der Gasdosiereinrichtung lösbar zu kuppelnde Rohrleitung aufweisen, derart, daß die Gasdosiereinrichtung wahlweise zum Befüllen anderer Druckgasverbraucher einzusetzen ist. Auf diese Weise entsteht eine Art Baukastensystem, weil der in dem Aufblaskörper enthaltende Druckgasbehälter sowohl zum Aktivieren des Aufblaskörpers selbst als auch zum Aufblasen anderer für Spezialfälle bereitgehaltener Abdichtblasen oder dergleichen verwendbar wird. In diesen Zusammenhang ist es auch vorteilhaft, wenn die Gasdosiereinrichtung nicht nur als Auslaßventil sondern auch als Einlaßventil des Druckgasbehälters einsetzbar und für ein Wiederauffüllen des Druckgasbehälters entsprechend umschaltbar ausgebildet wird.

Um zu verhindern, daß die Bedienungsperson bei einem Zerplatzen des Aufblaskörpers verletzt wird, sieht eine weitere Ausgestaltung der Erfindung vor, daß der Umfangsrand der insbesondere zum Einsetzen des Druckgasbehälters vorgesehenen Öffnung des Aufblaskörpers zwischen einer mit dem Druckgasbehälter tragfähig verbundenen Halteplatte und einem unmittelbar am Aufblaskörper anliegenden, ring- bzw. kragenförmig

2

um die Öffnung umlaufenden Berstschutzteller eingeklemmt wird, wobei die Klemmkraft an der Öffnung geringer als die Berstkraft des Aufblaskörpers ausgewählt wird. Bei Überlast kann sich dann die Klemmung an der inneren Peripherie des Berstschutztellers lösen, und das ausströmende Druckgas wird mit Hilfe des Berstschutztellers und der Halteplatte von der Hand der Bedienungsperson abgelenkt. Hierzu soll der Rand der Öffnung des Aufblaskörpers von innen nach außen um die innere Peripherie des Tellers gelegt sowie mit Hilfe der Halteplatte an die vom Aufblaskörper abgewandte Außenseite des Tellers angeklemmt werden. Vor einem Bersten rutscht dann der Rand der Öffnung des Abdichtkörpers aus der Klemmung und gleitet auf die von der Hand abgewandte Seite des Berstschutztellers.

In der Praxis ist für eine solide Befestigung und Klemmung des Randes der Aufblaskörperöffnung eine mit der Halteplatte zusammenwirkende Gegenplatte erforderlich. Zweckmäßig wird die Gegenplatte fest (z. B. stoffschlüssig) mit dem Druckgasbehälter verbunden und die Halteplatte wird (axial beweglich) um die Dosiereinrichtung herum angeordnet. Der um die innere Peripherie des Berstschutztellers gelegte Rand der Aufblaskörperöffnung kann dann; z. B. durch Schrauben, zwischen Halteplatte und Gegenplatte geklemmt werden. Zu beachten ist hierbie, daß der über die Gasdosiereinrichtung mit dem Druckgasbehälter zu kuppelnde Gaseinlaß des Aufblaskörpers im allgemeinen durch die Halteplatte und die Gegenplatte hindurchführen soll.

Der Aufblaskörper kann wie die eingangs gennante Abdichtblase im aufgeblasenen Zustand in etwe Kugelform annehmen. Es kann jedoch schwierig sein, die sich am Umfang der Kugel ansammelnde Flüssigkeit abzusaugen. Häufig ist es daher günstiger, wenn der Aufblaskörper eine im aufgeblasenen Zustand annähernd zylindrische Form besitzt. Dann wird eine besonders gute Abdichtung erreicht, weil sich im augeblasenen Zustand eine zylindrisch langgestreckte Form einstellt. Es kann jedoch - namentlich bei kurzen Kanaleingängen - auch vorteilhaft sein, wenn sich beim Aufblasen eine scheibenförming zylindrische Form des Aufblaskörpers einstellt. Wenn schließlich der abzudichtende Kanal im Queqerschnitt rechteckig oder quadratisch ist, kann es zweckmäßig sein, einen Aufblaskörper einzusetzen, der im aktivierten Zustand bereits von sich aus eine annähernd rechteckige oder quadratische Form annimmt. Anhand der schematischen Zeichnung eines Ausführungsbeispiels werden Einzelheiten der Erfindung erläutert.

Die Absperrvorrichtung besteht im bevorzugten Ausführungsbeispiel im wesentlichen aus einem elastischen Aufblaskörper 1 und einem ganz darin eingeschlossenen Druckgasbehälter 2. Der Aufblaskörper 1 besitzt eine Öffnung 3 mit darin luftdicht integriertem Druckgasanschluß 4. Der Umfangsrand 5 der Öffnung 3 des Aufblaskörpers 1 wird zwischen einer Halteplatte 6 und einer mit dem Druckgasbehälter 2 tragfähig verbundenen Gegenplatte 6a unter Einschluß eines Umfangsrandes der inneren Peripherie eines unmittelbar am Aufblaskörper 1 anliegenden, ring- bzw. kragenförmig um die Öffnung 3 umlaufenden Berstschutztellers 7 vorzugsweise so eingeklemmt, daß die Klemmkraft an dieser Stelle geringer als die Berstkraft des Aufblaskörpers 1 ist.

Der Druckgasanschluß des Aufblaskörpers 1 enthält im Ausführungsbeispiel eine manuell zu betätigende Gasdosiereinrichtung 8, die mit dem Druckgasbehälter 2 fest (form- kraft- oder stoffschlüssig) verbunden ist, und eine lösbar zu kuppelnde Rohrleitung 9 zwischen Gasdosiereinrichtung 8 und Aufblaskörper 1 bzw. dessen Einlaß 10. Die Rohrleitung 9 wird mit einem Anschluß 11 der Gasdosiereinrichtung 8 lösbar gekuppelt, derart, daß die Gasdosiereinrichtung 8 wahlweise zum Befüllen des Aufblaskörpers 1 oder anderer Druckgasverbraucher einzusetzen ist. Weiterhin besitzt die Gasdosiereinrichtung 8 eine Sicherheitseinrichtung 12, die bei Überdruck in Funktion tritt. Schließlich gehört zur Gasdosiereinrichtung 8 eine Kontrolleinrichtung 13, z. B. ein Manometer, mit deren Hilfe die Einsatzbereitschaft der Absperrvorrichtung jederzeit zu überprüfen ist.

Der Aufblaskörper 1 soll wenigstens an seiner Außenhaut aus einem gegenüber dem jeweils zurückzuhaltenden Material, insbesondere gegenüber Öl, Säure und Lauge, resistenten Werkstoff bestehen. Für die Anwendung ist außerdem die beim Aufblasen zu erreichende Aktivform 14 von bedeutung. Wenn die Aktivform 14- wie mit durchgezogener Linie dargestellt - im wesentlichen zylindrisch ist, läßt sich eine gute Abdichtung auf einer der Größe des Zylindermantels entsprechenden Fläche erreichen. Wenn ein abzudichtender Kanaleingang oder dergleichen nur kurz ist, kann es auch günstig sein, nicht eine langgestreckte Aktivform 14 sondern eine Scheibenform 15 des aktivierten Aufblaskörpers 1 vorzusehen.

Zum Betätigen der Gasdosiereinrichtung 8 wird im Ausführungsbeispiel ein zangenartig zu bewegender Hebel 16 vorgesehen, der gegenüber dem auch zum Heben und Positionieren der ganzen Vorrichtung geeigneten Tragegriff 17 um eine Achse 18 schwenbar ist. Beim Betätigen des Hebels 16 wird ein Ventil 19 geöffnet, und im Druckgasbehälter 2 enthaltenes Gas kann über die Rohrleitung 9 sowie den Einlaß 10 in den Aufblaskörper 1 fließen. Beim Loslassen des Hebels 16 wird das Ventil 19 geschlossen, so daß die Bedienungsperson den Enddruck bzw. das Endvolumen des Aufblaskörpers 1 manuell einstellen kann.

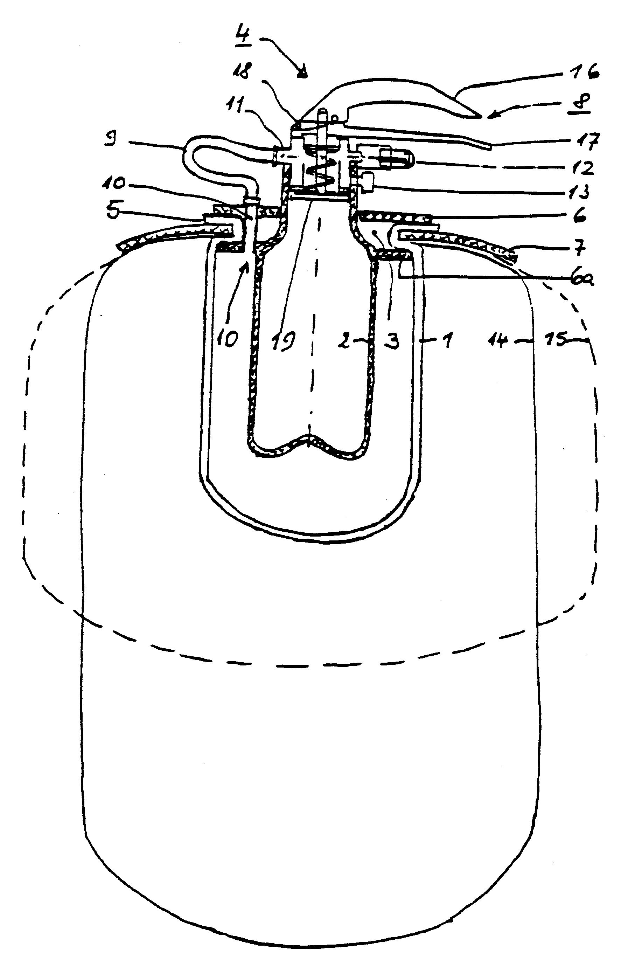

## Patentansprüche

1. Absperrvorrichtung für Abflußkanäle, -schächte, -rohre oder dergleichen mit einem elastischen Aufblaskörper (1), welcher eine Öffnung (3) mit darin luftdicht integriertem Druckgasanschluß (4) besitzt und einen mit dem Druckgasanschluß (4) zu verbindenden Druckgasbehälter (2) umschließt, **dadurch gekennzeichnet ,** daß eine manuell zu betätigende Gasdosiereinrichtung (8) in der verbindung zwischen Druckgasbehälter (2) und Aufblaskörper (1) vorgesehen ist und daß die Gasdosiereinrichtung (8) fest mit dem Druckgasbehälter (2) und mit einem an letzterem vorgesehenen dem Tragegriff (17) verbunden ist.

2. Absperrvorrichtung nach Anspruch 1, **dadurch gekennzeichnet ,** daß die verbindung zwischen Gasdosiereinrichtung (8) und Aufblaskörper (1) eine außerhalb des Aufblaskörpers (1) angeordnete und mit einem Anschluß (11) der Gasdosiereinrichtung (8) lösbar zu kuppelnde Rohrleitung (9) aufweist, derart, daß die Gasdosiereinrichtung (8) in verbindung mit dem Druckgasbehälter (2) wahlweise zum Befallen des Aufblaskörpers (1) oder anderer Druckgasverbraucher sowie als Einlaßventil des Druckgasbehälters (2) einzusetzen ist.

3. Abspervorrichtung nach einem der Ansprüche 1 und 2, **dadurch gekennzeichnet ,** daß der Umfangsrand (5) der Öffnung (3) des Aufblaskörpers (1) zwischen einer mit dem Druckgasbehälter (2) tragfähig verbundenen Halteplatte (6) und einem unmittelbar am Aufblaskörper (1) anliegenden, ring- bzw. kragenförmig um die Öffnung (3) umlaufenden Berstschutzteller (7) eingeklemmt ist und daß der Klemmdruck an dieser Stelle geringer ist als der Berstdruck des Aufblaskörpers (1).

4. Absperrvorichtung nach Anspruch 3, **dadurch gekennzeichnet ,** daß der Rand (5) der Öffnung (3) des Aufblaskörpers (1) um die innere Peripherie des Berstschutztellers (7) herum von innen nach außen gefaltet sowie mit Hilfe der Halteplatte (6) and die von Aufblaskörper (1) abgewandte Außenseite des Berstschutztellers (7) angeklemmt ist.

5. Absperrvorrichtung nach Anspruch 4, **dadurch gekennzeichnet,** daß der um die innere Peripherie des Berstschutztellers (7) gelegte Rand (5) des Aufblaskörpers (1) zwischen der Halteplatte (6) und einer fest mit dem Druckgasbehälter (2) verbundenen Gegenplatte (6a) eingeklemmt ist.

6. Absperrvorrichtung nach Anspruch 4 oder 5, **dadurch gekennzeichnet ,** daß der äußere Durchmesser des Berstschutztellers (7) eine für den Schutz einer die Gasdosiereinrichtung (8) betätigenden Hand ausreichende Größe aufweist.

## Claims

1. Shutting-off device for outflow ducts, shafts, pipes or the like with an elastic inflatable body (1) which has an opening (3) with, inside it, an air-tightly integrated pressurized gas connection (4) and surrounds a pressurized gas container (2) to be connected with the pressurized gas connection (4), characterized in that a manually actuated gas metering device (8) is provided in the connection between the pressurized gas container (2) and the inflatable body (1), and in that the gas metering device (8) is rigidly connected with the pressurized gas container (2) and with a carrying handle (17) provided on the latter.

2. Shutting-off device according to claim 1, characterized in that the correction between the gas metering device (8) and the inflatable body (1) has a conduit (9) mounted outside the inflatable body (1) and to be detachably connected with a correction (11) of the gas metering device (8) in such a manner that the gas metering device can be set in connection with the pressurized gas container alternatively for filling the inflatable body (1) or other pressurized gas consuming devices, as well as an inlet valve for the pressurized gas container.

3. Shutting-off device according to either claim 1 or 2, characterized in that the peripheral edge (5) of the opening (3) of the inflatable body (1) is clamped between a holder plate (6) joined with pressurized gas container (2) so as to be able to carry it and a bursting protection plate (7) applying directly on the inflatable body (1) and surrounding the opening (3) in the shape of a ring or collar, and in that the clamping pressure at this point is smaller than the bursting pressure of the inflatable body (1).

4. Shutting-off device according to claim 3, characterized in that the edge (5) of the opening (3) of the inflatable body (1) is folded from the inside outwards around the inner periphery of the bursting protection plate (7), and is clamped with the aid of the holder plate (6) onto the outer side of the bursting protection plate (7) facing away from the inflatable body (1).

5. Shutting-off device according to claim 4, characterized in that the edge (5) of the inflatable body (1) disposed around the inner periphery of the bursting protection plate (7) is clamped in between the holder plate (6) and a counter-plate (6a) rigidly connected with the pressurized gas container (2).

6. Shutting-off device according to either claim 4 or 5, characterized in that the outer diameter of the bursting protection plate (7) is of adequate size for the protection of a hand actuating the gas metering device (8).


**Revendications**

1. Dispositif obturateur pour canaux, puits, tuyaux d'écoulement et analogues comprenant un corps gonflable élastique (1) qui possède une ouverture (3) dans laquelle est intégré hermétiquement un raccordement de gaz comprimé (4) et entoure un réservoir de gaz comprimé (2) à relier au raccordement de gaz comprimé (4), caractérisé en ce qu'un dispositif de dosage de gaz (8) à actionnement manuel est prévu dans la liaison entre le réservoir de gaz comprimé (2) et le corps gonflable (1) et en ce que le dispositif de dosage de gaz (8) est relié de manière fixe au réservoir de gaz comprimé (2) et à une poignée (17) prévue sur ce dernier.

2. Dispositif obturateur selon la revendication 1, caractérisé en ce que la liaison entre le dispositif de dosage de gaz (8) et le corps gonflable (1) présente une conduite tubulaire (9) qui est disposée à l'extérieur du corps gonflable (1) et doit être accouplée de manière amovible à un raccord (11) du dispositif de dosage de gaz (8) de telle manière que le dispositif de dosage de gaz (8) puisse être utilisé en liaison avec le réservoir de gaz comprimé (2) au choix pour remplir le corps gonflable (1) ou d'autres dispositifs consommateurs de gaz comprimé ainsi que comme soupape d'admission du réservoir d'air comprimé (2).

3. Dispositif obturateur selon l'une des revendications 1 et 2, caractérisé en ce que le bord périphérique (5) de l'ouverture (3) du corps gonflable (1) est coincé entre une plaque de maintien (6) reliée solidement au réservoir de gaz comprimé (2) et un disque anti-éclatement (7) qui prend appui directement sur le corps gonflable (1) et passe autour de l'ouverture (3) sous forme de bague ou de collet et en ce que la pression de serrage à cet endroit est plus faible que la pression d'éclatement du corps gonflable (1).

4. Dispositif obturateur selon la revendication 3, caractérisé en ce que le bord (5) de l'ouverture (3) du corps gonflable (1) est replié de l'intérieur vers l'extérieur autour de la périphérie intérieure du disque anti-éclatement (7) et est pressé contre le côté extérieur du disque anti-éclatement (7) éloigné du corps gonflable (1) à l'aide de la plaque de maintien (6).

5. Dispositif obturateur selon la revendication 4, caractérisé en ce que le bord (5) du corps gonflable (1) placé autour de la périphérie intérieure du disque anti-éclatement (7) est coincé entre la plaque de maintien (6) et une contre-plaque (6a) reliée de manière fixe au réservoir de gaz comprimé (2).

6. Dispositif obturateur selon la revendication 4 ou 5, caractérisé en ce que le diamètre extérieur du disque anti-éclatement (7) présente une taille suffisante pour protéger une main actionnant le dispositif de dosage de gaz (8).